# EUROPEAN PATENT SPECIFICATION

(11) **EP 2 024 433 B1**
(45) Date of publication and mention of the grant of the patent: **11.01.2012**
(21) Application number: 07747421.1
(22) Date of filing: 04.05.2007
(51) Int. Cl.: C08K 3/22, C08J 3/22, B29C 49/00, C08K 5/01

(54) **TITANIUM DIOXIDE BASED COLOUR CONCENTRATE FOR POLYESTER MATERIALS**
FARBKONZENTRAT AUF TITANDIOXIDBASIS FÜR POLYESTERMATERIALIEN
CONCENTRE COLORANT A BASE DE DIOXYDE DE TITANE POUR MATIERES A BASE DE POLYESTER

(30) Priority: 05.05.2006 EP 06076006
(43) Date of publication of application: 18.02.2009
(73) Proprietor: Holland Colours N. V., 7323 RW Apeldoorn (NL)
(72) Inventor: WERINK, Johan Jozef Marinus, NL-7323 RW Apeldoorn (NL); DE JAGER, Andries Maria, NL-7323 RW Apeldoorn (NL); STOOP, Jeroen, NL-7323 RW Apeldoorn (NL); ROELOFS, Jules Caspar Albert Anton, NL-7323 RW Apeldoorn (NL)
(74) Representative: Hatzmann, Martin
(86) International application number: PCT/NL2007/050197
(87) International publication number: WO 2007/129893

(56) References cited:
- EP-A- 0 709 424
- EP-A2- 0 455 370
- WO-A-2005/102865
- US-B1- 6 469 083
- DATABASE WPI Section Ch, Week 199429 Derwent Publications Ltd., London, GB; Class A97, AN 1994-237470 XP002395957 -& JP 06 093201 A (TOKYO INK KK) 5 April 1994 (1994-04-05)
- DATABASE WPI Section Ch, Week 200377 Derwent Publications Ltd., London, GB; Class A23, AN 2003-817850 XP002395956 -& JP 2003 128793 A (NIPPON FERRO KK) 8 May 2003 (2003-05-08)

## Description

The invention is in the field of polyester materials, more in particular in the field of colour concentrates for polyesters in the production of packaging, such as bottles, for storing products that are sensitive to visible or UV light.

The effects of light on milk and other dairy products sold in grocery stores can adversely affect the product if it is not carefully packaged and handled. Various strategies can be employed to minimize or eliminate the photo oxidation in milk, which can result from the effects of light. The use of properly formulated pigmented containers can significantly reduce milk oxidation and vitamin depletion, however some potential problems exist with pigments. Loss of nutrients in milk can to a large extent be prevented by controlling store lighting, setting proper storage temperatures and using closed storage cases.

Today, almost all milk is purchased in retail outlets such as supermarkets and convenience stores. The density polyethylene (HDPE) bottle is still widely used as package for milk as consumers like its ease of handling, resealability and visible fill level. Initially, HDPE replaced glass bottles, but since 1971 its growth has come largely at the expense of paper cartons. Nowadays packaging materials like pouches are also used but especially polyethylene terephthalate (PET) bottles are finding themselves more and more in the centre of attention. Technical difficulties related to the protection of dairy products/milk have up to now prevented the application of PET packaging in this area.

Attempts have been made to modify the bottles to minimize light transmission. These include using ultraviolet (UV) light absorbers, as well as incorporating various pigments into the plastic. Glass allows the highest light transmission through the visible spectrum. Adding a UV absorber to the natural bottle provides excellent protection in the ultraviolet light range below 380 nanometers, but gives little benefit in the visible, critical blue-violet visible range of 400-550 nanometers.

Prior art multilayer bottles (PET with TiO₂/black layer (PET)/PET with TiO₂) does not permit light transmittance, however, the black layer shines through the bottle (really grey appearance) and the multilayer is more expensive and processing is more difficult. The same applies for a multilayer with a red layer (most red absorbs up to 550 nm) as the red layer shines through, resulting in a reddish, pinkish appearance.

Incorporating white pigment (titanium dioxide, TiO₂) into the material significantly reduces, but does not completely eliminate, light transmission in the harmful blue-violet region. A paper carton is not fully opaque. It also allows some light transmission in the critical visible area. However, by incorporating high levels of TiO₂ in the polyester, i.e. amounts of 4 wt.% or over, it has become possible to obtain an opaque material having a degree of transmission that is low enough to store UHT treated dairy products for a sufficiently long period of time. Typically, this type of milk-products has a shelf-life of about 3 months outside the refrigerator. In WO 2005/102865 such a packaging material is described.

As indicated, the bottles of described in WO 2005/102865 provide a reasonably good opacity and shielding of the contents thereof. However, there is still need for improvement. Further, the processing properties of the material is not very good, as it is relatively sensitive to delamination after blow-moulding. This means that in the walls of the packaging delamination occurs, with the result of decreased barrier properties and failure (breaking) of the package, especially under pressure.

The cause of this phenomenon is uncertain, but it has now been found that by the use of a specific titanium dioxide based colour concentrate, these problems can be overcome. Further it has been found that the transmission (or light blocking) properties of the material are improved in case certain specific combinations of components are used.

In a first embodiment the invention is accordingly directed to a titanium dioxide based colour concentrate, suitable for coloring polyester materials, said concentrate comprising, based on the weight of the concentrate, more than 50 % of titanium dioxide, up to 20 % of at least one wax selected from the group of glycerol monostearate, hydrogenated castor oil and polyethoxylated glycols, and up to 30 % of at least one polyester, such as polyethylene-terephthalate.

The invention resides in the combined use of titanium dioxide, a specific wax and polyester in the concentrate. Using a concentrate based on these components in colouring the blow-moulded bottles or other biaxially stretched packaging materials, results in a product possessing a good resistance against delamination (even though the material has a high content of titanium dioxide), while at the same time having a good transmission profile, i.e. being opaque for visible and UV light, thereby providing a packaging that enables a long shelf life for dairy products. It is to be noted that other additive systems, such as those described in US patent 6,649,083, do not provide the superior properties obtained by the present combination of compounds, as is shown in the comparative examples

The first component of the concentrate is titanium dioxide. This can be present in various crystal forms, rutile and anatase being the most important. The amount of titanium dioxide is more than 50 wt.%, preferably at least 60 wt.%. The upper limit is not very critical, but for practical purposes an amount of at most 75 wt.% is preferred.

The second component is a wax, which is preferably present in an amount of 1 to 10 wt.%. This wax is selected from the group of glycerol monostearate, hydrogenated castor oil and polyethoxylated glycols.

Generally it is preferred that the wax has the following properties:
- is solid at 20°C and has a consistency, at that temperature, which can vary from soft and plastic, to brittle and hard;
- if solid, then coarse to fine crystalline, transparent to opaque, but not glassy;
- melts without decomposition above 40°C;
- has a relatively low viscosity at a temperature which is somewhat above its melting point;
- varies considerably in consistency and solubility by changing the temperature;
- can be polished by rubbing under a light pressure.

In case a poly-ethoxylated glycol is used, this is preferably poly ethylene glycol. Also combinations of waxes can be used in the present invention.

A further component of the material of the present invention is at least one polyester, optionally a combination of two or more polyesters. The amounts thereof are up to 30 wt.%, preferably at least 5 wt.%.

The suitable polyester is a condensation product of a dibasic acid and a glycol. Typically, the dibasic acid comprises an aromatic dibasic acid, or ester or anhydride thereof, such as isophthalic acid, terephthalic acid, naphthalene-1,4-dicarboxylic acid, naphthalene-2,6,-dicarboxylic acid, phthalic acid, phthalic anhydride, tetrahydrophthalic anhydride, trimellitic anhydride, diphenoxyethane-4,4'-dicarboxylic acid, diphenyl-4,4'-dicarboxylic acid, and mixtures thereof. The dibasic acid also can be an aliphatic dibasic acid or anhydride, such as adipic acid, sebacic acid, decane-1,10-dicarboxylic acid, fumaric acid, succinic anhydride, succinic acid, cyclohexanediacetic acid, glutaric acid, azeleic acid, and mixtures thereof. Other aromatic and aliphatic dibasic acids known to persons skilled in the art also can be used. Preferably, the dibasic acid comprises an aromatic dibasic acid, optionally further comprising up to about 20%, by weight of the dibasic acid component, of an aliphatic dibasic acid.

The glycol, or diol, component of the polyester comprises ethylene glycol, propylene glycol, butane-1,4-diol, diethylene glycol, a polyethylene glycol, a polypropylene glycol, neopentyl glycol, a polytetramethylene glycol, 1,6-hexylene glycol, pentane-1,5-diol, 3-methylpentanediol-(2,4), 2-methylpentanediol-(1,4), 2,2,4-trimethylpentanediol-(1,3), 2-ethylhexanediol-(1,3), 2,2-diethylpropanecliol-(1,3), hexanediol-(1,3), 1,4-di-(hydroxyethoxy)benzene, 2,2-bis-(4-hydroxycyclohexyl)propane, 2,4-dihydroxy-1,1, 3, 3-tetramethylcyclobutane, 2, 2-bis-(3-hydroxyethoxyphenyl)propane, 2,2-bis-(4-hydroxypropoxyphenyl)propane, 1,4-dihydroxymethyleyclohexane, and mixtures thereof. Additional glycols known to persons skilled in the art also can be used as the glycol component of the diluent polyester.

In particular, the polyester preferably comprises PET ,e.g. but not limiting, virgin bottle grade PET or postconsumer PET (PC-PET)), cyclohexane dimethanol/PET copolymer (PETG), polyethylene naphthalate (PEN), polybutylene terephthalate (PB7), and mixtures thereof. Suitable polyesters also can include polymer linkages, side chains, and end groups different from the formal precursors of the simple polyesters previously specified.

Suitable polyesters for use in the present invention typically have an intrinsic viscosity of about 0.2 to about 1.2, and more preferably about 0.2 to about 0.6 (for a 60/40 blend of phenol/tetrachloroethane solvent). For PET, an intrinsic viscosity value of 0.6 corresponds approximately to a viscosity average molecular weight of 36,000, and an intrinsic viscosity value of 1.2 corresponds approximately to a viscosity average molecular weight of 103,000.

The polyester optionally can include additives that do not adversely affect the preblend, or preforms or containers prepared therefrom. The optional additives include, but are not limited to, stabilizers, e.g., antioxidants or ultraviolet light screening agents, extrusion aids, drying agents, fillers, anticlogging agents, crystallization aids, impact modifiers, additives designed to make the polymer more degradable or combustible, dyes, other pigments, and mixtures thereof. The optional additives are present in the polyester in an amount of 0% to about 2%, by weight of the polyester, individually, and 0% to about 10%, by weight of the polyester, in total. The dyes and other pigments may be used to provide a specific colour to the final product, without negatively influencing the transmission properties.

In order to improve the light transmission properties of the final packaging, i.e. decreasing the transmission of the portion of visible and UV light that is detrimental to the shelf life of light sensitive products, such as dairy products, an amount of iron oxide or mixed metal oxides consisting of Ni, Fe, Mn, Ti,Co, Cr, Cu, Sn, Sb and combinations can be added. Examples are Pigment Black 11 (CI number 77499), Pigment Black 12 (CI number 77543), Pigment Black 28 ((CI number 77428) or Pigment Black 30 (CI number 77504) and mixtures thereof. These compounds can be commercially purchased at pigment producing companies e.g., the Shepherd Colour Company, Cincinnati, USA. This amount can be up to 3 wt.%. The preferred amount is between 0.1 and 1 wt.%. Other components that may be used in the concentrate are graphite and carbon black.

The concentrate can be prepared using suitable methods known to the skilled person. Preferred methods are based on melt blending the various components at a temperature, whereby the polyester(s) and the waxy compound are in molten form. The melt that is thus obtained is subsequently brought in suitable solid form. Melt blending can suitably be done in an extruder and cutting the cooled extrudate into a suitably sized product.

The invention is also directed to the use of the concentrate in colouring packaging, including bottles, that is prepared from polyesters, more in particular PET, PBT and PEN by blow moulding a preform into a suitably shaped product. The concentrate is incorporated in the polyester from which the preform is made, generally by feeding the concentrate in particle form, together with the polyester (and optional other additives), to the extruder on which the preforms are produced. The preforms are then, in a separate step, blow moulded in the final packaging (bottle). The conditions for preparing the preform and for blow moulding the final product are the conventional conditions, which are easily determined by the skilled person, based on the various parameters involved, such as type and size of bottle, type of polyester, etc.

The amount of concentrate that is added to the polyester may vary between wide ranges. Preferred amounts are up to 15 wt.% of the concentrate, based on the combined weight of the polyester and the concentrate. More preferred amounts are between 2.5 and 15 wt.%. Higher amounts than 15 wt.% may be used, but are generally not necessary, as can be seen from the Examples.

The invention now elucidated on the basis of the following, nonlimiting examples.

### EXAMPLES

A mixture of 3490 g TiO2, 1250 g PET resin (IV of 0.60) 250 g GMS (glycerol monostearate) and 10 g of Pigment black 12 (CI number 77543) was mixed and compounded/granulated on a laboratory extruder (APV 19mm twin screw) and temperature profile between 270 and 240 C at 300 rpm.

The resulting granulate was used to prepare bottles via injection moulding (Boy 50T2) and stretch blow moulding (SP 2000B B/J from Suyash PET International Ltd.) at several concentrations (1,2,4,6,8,10,12 wt%).

A commercial 60% TiO2 masterbatch was taken as a standard for comparison. The masterbatch was used to prepare bottles via injection moulding using the same equipment as described above at several concentrations (1,2,6,12,17.5,22.5 and 29 wt%).

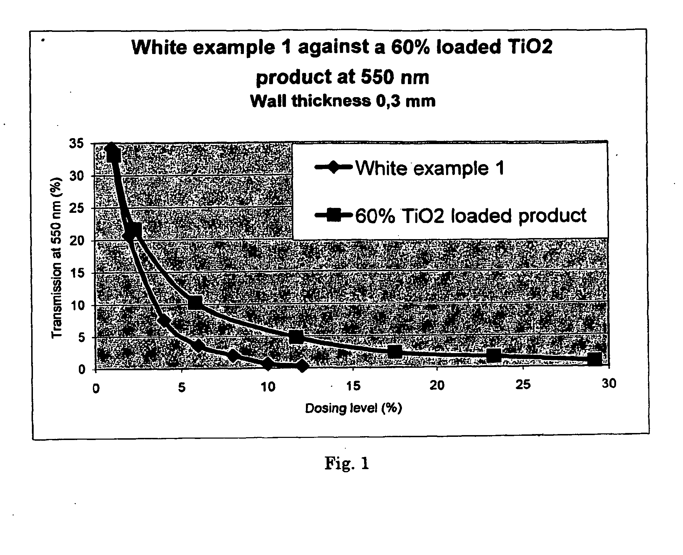

The transmission curves from 200-700 nm of the blown bottles were collected using a Cary 5000 equipped with an integrating sphere. The %transmission at 550 nm was taken as a function of dosing level. Results are shown in Figure 1. As can be seen, the amount of light transmitted using the concentrate of the invention (UHT white) is significantly lower, at lower dosing levels, than using the standard masterbatch.

### COMPARATIVE EXAMPLES

In order to compare results from US patent 6,469,083 with the results from the present invention two samples were prepared consisting of 70.0 parts by weight of an additive package consisting solely of TiO2 pigment with 30.0 parts by weight of a carrier.

Sample R7923, the components pentaerythritol ester of partially hydrogenated wood rosin 20.0% (wt) (Hercules FORAL 105); core-shell polymer 22.0% (wt) (Rohm & Haas PARALOID EXL-2300) thermoplastic PET (SIV = 0.94 dL/g) 58.0% (wt) (Die Mossi & Ghisolfi-Gruppe TRAYTUF T95).

Sample R7924, the components pentaerythritol ester of partially hydrogenated wood rosin 20.0% (wt) (Hercules FORAL 105); core-shell polymer 22.0% (wt) (Rohm & Haas PARALOID EXL-2600) thermoplastic PET (SIV = 0.94 dL/g) 58.0% (wt) (Die Mossi & Ghisolfi-Gruppe TRAYTUF T95).

In both cases, the components were dry-blended and compounded/granulated on a laboratory extruder (APV 19mm twin screw) with a temperature profile between 270 and 240 C at 300 rpm. The resulting granulate was used to prepare bottles via injection moulding (Arburg Allrounder 320, ) and stretch blow moulding (SP 2000B B/J from Suyash PET International Ltd.) at 10 and 14%. For comparison, the sample material UHT White described in Example 1 was dosed at 5 and 10%.

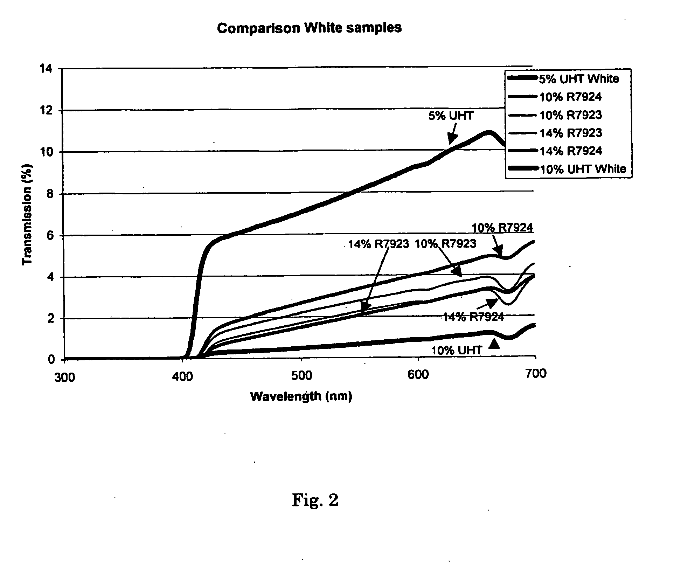

Figure 2 shows the results from transmission measurements from 300-700 nm of the blown bottles, which were collected using a Cary 5000 equipped with an integrating sphere. As can be seen, the amount of light transmitted using the concentrate of the invention (UHT white) is significantly lower, at lower dosing levels, than of the comparative samples R7923 and R7924.

## Claims

1. Titanium dioxide based colour concentrate, suitable for colouring polyester materials, said concentrate comprising, based on the weight of the concentrate, more than 50 % of titanium dioxide, up to 20 % of at least one wax
selected from the group of glycerol monostearate, hydrogenated castor oil and polyethoxylated glycols, and up to 30 % of at least one polyester.

2. Colour concentrate according to claim 1, wherein the amount of titanium dioxide in the concentrate is between 60 and 75 wt.%.

3. Concentrate according to claim 1 or 2, wherein the amount of wax is between 1 and 10 wt.%.

4. Concentrate according to claim 1-3, wherein the amount of polyester is at least 5 wt.%.

5. Concentrate according to claim 1-4, wherein the said polyester is polyethylene-terephtalate having an intrinsic viscosity (IV) between 0.2 and 1.2, preferably between 0.2 and 0.65 (for a 60/40 blend of phenol/tetrachloroethane solvent).

6. Concentrate according to claim 1-5, wherein further iron oxide, mixed metal oxide, graphite, carbon black or combinations thereof are present in the concentrate, preferably in an amount of up to 3 wt.%.

7. Concentrate according to claim 1-6, wherein the mixed oxide is selected from Pigment Black 11 (CI number 77499), Pigment Black 12 (CI number 77543), Pigment Black 28 ((CI number 77428) or Pigment Black 30 (CI number 77504) and mixtures thereof.

8. Concentrate according to claim 1-7, wherein the concentrate additionally contains a further polyester, preferably selected from the group of polyethylene-terephtalate, cyclohexane dimethanol/PET copolymer (PETG), polyethylene naphthalate (PEN), polybutylene terephthalate (PBT), and mixtures thereof.

9. Use of a concentrate according to claim 1-8, for colouring polyester, such as polyethylene terephthalate, polybutylene terephthalate or polyethylene naphthalate, preferably polyester preforms for bottles or other containers.

10. Use according to claim 9, wherein the said bottles are for storing light sensitive products, such as milk or milk products.

11. Process for preparing polyester bottles suitable for storing milk or milk products and having a low transmission for visible and UV light, said process comprising producing a preform for said bottles from the polyester and the concentrate of claims 1-8, and blow moulding the preform into a bottle.

12. Process according to claim 11, wherein the concentrate is used in an amount of 2.5 to 15 wt.% of the weight of the polyester.

13. Bottle produced by the process of claims 11 or 12.

## Patentansprüche

1. Farbkonzentrat auf Titandioxidbasis, das zum Färben von Polyestermaterialien geeignet ist, wobei das Konzentrat, bezogen auf das Gewicht des Konzentrats, mehr als 50% Titandioxid, bis zu 20% wenigstens eines Wachses, das aus der Gruppe Glycerinmonostearat, hydriertes Ricinusöl und polyethoxylierte Glycole ausgewählt ist, und bis zu 30% wenigstens eines Polyesters umfasst.

2. Farbkonzentrat gemäß Anspruch 1, wobei die Menge an Titandioxid in dem Konzentrat zwischen 60 und 75 Gew.-% liegt.

3. Konzentrat gemäß Anspruch 1 oder 2, wobei die Menge des Wachses zwischen 1 und 10 Gew.-% liegt.

4. Konzentrat gemäß Anspruch 1 bis 3, wobei die Menge des Polyesters wenigstens 5 Gew.-% beträgt.

5. Konzentrat gemäß Anspruch 1 bis 4, wobei es sich bei dem Polyester um Polyethylenterephthalat mit einer Grenzviskositätszahl (IV) zwischen 0,2 und 1,2, vorzugsweise zwischen 0,2 und 0,65 (für ein 60/40-Gemisch von Phenol/Tetrachlorethan-Lösungsmittel), handelt.

6. Konzentrat gemäß Anspruch 1 bis 5, wobei weiterhin Eisenoxid, gemischtes Metalloxid, Graphit, Ruß oder Kombinationen davon in dem Konzentrat vorhanden sind, vorzugsweise in einer Menge von bis zu 3 Gew.-%.

7. Konzentrat gemäß Anspruch 1 bis 6, wobei das gemischte Oxid aus Pigmentschwarz 11 (CI-Nummer 77499), Pigmentschwarz 12 (CI-Nummer 77543), Pigmentschwarz 28 (CI-Nummer 77428) oder Pigmentschwarz 30 (CI-Nummer 77504) und Gemischen davon ausgewählt ist.

8. Konzentrat gemäß Anspruch 1 bis 7, wobei das Konzentrat zusätzlich einen weiteren Polyester enthält, der vorzugsweise aus der Gruppe ausgewählt ist, die aus Polyethylenterephthalat, Cyclohexandimethanol/PET-Copolymer (PETG), Polyethylennaphthalat (PEN), Polybutylenterephthalat (PBT) und Gemischen davon besteht.

9. Verwendung eines Konzentrats gemäß Anspruch 1 bis 8 zum Färben von Polyester, wie Polyethylenterephthalat, Polybutylenterephthalat oder Polyethylennaphthalat, vorzugsweise Polyestervorformlingen für Flaschen oder andere Behälter.

10. Verwendung gemäß Anspruch 9, wobei die festen Flaschen zur Aufbewahrung von lichtempfindlichen Produkten, wie Milch oder Milchprodukten, dienen.

11. Verfahren zur Herstellung von Polyesterflaschen, die zur Aufbewahrung von Milch oder Milchprodukten geeignet sind und nur eine geringe Transmission für sichtbares und UV-Licht aufweisen, wobei das Verfahren das Herstellen eines Vorformlings für die Flaschen aus dem Polyester und dem Konzentrat gemäß den Ansprüchen 1 bis 8 und das Blasformen des Vorformlings zu einer Flasche umfasst.

12. Verfahren gemäß Anspruch 11, wobei das Konzentrat in einer Menge von 2,5 bis 15 Gew.-% des Gewichts des Polyesters verwendet wird.

13. Flasche, hergestellt nach dem Verfahren gemäß den Ansprüchen 11 oder 12.

## Revendications

1. Concentré de matière colorante à base de dioxyde de titane, approprié pour colorer les matières à base de polyester, ledit concentré comprenant, sur la base du poids du concentré, plus de 50 % de dioxyde de titane, jusqu'à 20 % d'au moins une cire choisie dans le groupe du monostéarate de glycérol, de l'huile de ricin hydrogénée et des glycols polyéthoxylés, et jusqu'à 30 % d'au moins un polyester.

2. Concentré de matière colorante selon la revendication 1 où la quantité de dioxyde de titane dans le concentré est entre 60 et 75 % en poids.

3. Concentré selon la revendication 1 ou 2 où la quantité de cire est entre 1 et 10 % en poids.

4. Concentré selon les revendications 1-3 où la quantité de polyester est d'au moins 5 % en poids.

5. Concentré selon les revendications 1-4 où ledit polyester est un polyéthylène-téréphtalate ayant une viscosité intrinsèque (VI) entre 0,2 et 1,2, de préférence entre 0,2 et 0,65 pour un mélange 60/40 de solvant phénol/tétrachloréthane.

6. Concentré selon les revendications 1-5 où, en outre, de l'oxyde de fer, un oxyde métallique mixte, du graphite, du noir de carbone ou des combinaisons de ceux-ci sont présents dans le concentré, de préférence en une quantité jusqu'à 3 % en poids.

7. Concentré selon les revendications 1-6 où l'oxyde mixte est choisi parmi Pigment Black 11 (n° CI 77499), Pigment Black 12 (n° CI 77543), Pigment Black 28 (n° CI 77428) ou Pigment Black 30 (n° CI 77504) et leurs mélanges.

8. Concentré selon les revendications 1-7 où le concentré contient en outre un autre polyester, de préférence choisi dans le groupe du polyéthylène-téréphtalate, d'un copolymère cyclohexane-diméthanol/PET (PETG), du polyéthylène naphtalate (PEN), du polybutylène téréphtalate (PBT) et des mélanges de ceux-ci.

9. Utilisation d'un concentré selon les revendications 1-8 pour colorer un polyester, comme le polyéthylène téréphtalate, le polybutylène téréphtalate ou le polyéthylène naphtalate, de préférence des paraisons de polyester pour bouteilles ou autres récipients.

10. Utilisation selon la revendication 9 où lesdites bouteilles sont destinées au stockage de produits sensibles à la lumière, comme le lait ou les produits laitiers.

11. Procédé pour préparer des bouteilles en polyester appropriées pour le stockage du lait ou des produits laitiers et ayant une faible transmission pour la lumière visible et UV, ledit procédé comprenant la production d'une paraison pour lesdites bouteilles à partir du polyester et du concentré des revendications 1-8, et l'extrusion-soufflage de la paraison en une bouteille.

12. Procédé selon la revendication 11 où le concentré est utilisé en une quantité de 2,5 à 15 % en poids du poids du polyester.

13. Bouteille produite par le procédé selon la revendication 11 ou 12.
